# EUROPEAN PATENT APPLICATION

(11) **EP 3 851 647 A1**
(43) Date of publication of application: **21.07.2021**
(21) Application number: 21150678.7
(22) Date of filing: 08.01.2021
(51) Int. Cl.: F01N 3/28, B01J 37/02

(54) **PALLET FOR SUPPORTING A CATALYST MONOLITH DURING COATING**

(30) Priority: 16.01.2020 US 202062961868 P
(71) Applicant: Johnson Matthey Public Limited Company, London EC4A 4AB (GB)
(72) Inventor: FISH, David, Royston, Hertfordshire SG8 5HE (GB)
(74) Representative: Wilson, Nicola Ann

(57) **Abstract**

A pallet for supporting a catalyst monolith during coating, comprising a ring with two or more support bars extending across the inside of the ring.

## Description

### BACKGROUND

The catalytic conversion of the noxious components in vehicular exhaust gases is well known for overcoming air pollution. The catalysts for the various forms of converters are commonly manufactured as catalyst-coated rigid monoliths having a honeycomb arrangement of a multiplicity of longitudinal passageways in each unit in order to provide a high surface area.

A common method of coating the monoliths with catalyst is to apply a catalyst slurry to the monolith and then apply a vacuum to draw the catalyst slurry through the monolith and passageways, thereby forming a catalyst coating on the surfaces of the passageways. During this vacuum application, the monolith is often supported on a support ring having a lip around the inner edge of the ring, upon which the monolith rests, with the vacuum being applied from beneath the support ring. This lip blocks the outer passageways from the vacuum pull, however, and therefore the catalyst slurry in those passageways may not be effectively drawn through, resulting in insufficient or uneven catalyst coating and/or blockage of the passageways.

As a result, a support pallet that can support and balance a monolith during coating without blocking the outer passageways from vacuum pull would provide immediate benefit.

### SUMMARY OF THE INVENTION

In some aspects of the present invention, a pallet for supporting a catalyst monolith during coating includes a ring with two or more support bars extending across the inside of the ring. The two or more support bars may be positioned parallel to each other. In some aspects, the ring is circular or oval-shaped. Preferably, the ring does not include a lip which projects radially inward from the ring. The ring may be made of, for example, stainless steel or ceramic. The support bars may be made of, for example, stainless steel or ceramic. The support bars may be independent pieces which each may be secured to the ring. In some aspects, the support bars are inserted into receiving slots formed in the ring. In some aspects, the receiving slots include springs upon which the supports bars rest. In some aspects, the pallet includes a substrate location plate.

In some aspects of the present invention, a method of coating a catalyst monolith having a multitude of axially aligned passageways includes: (a) applying a catalyst slurry to the monolith; and (b) applying a vacuum to the monolith to draw the catalyst slurry through and form a catalyst coating on surfaces of the passageways; wherein the catalyst monolith is positioned on the pallet which includes a ring with two or more support bars extending across the inside of the ring, such that the catalyst monolith is balanced and supported on the support bars. The method may further include drying and calcining the monolith. The method may include applying the catalyst slurry to a top end of the monolith. In some aspects, the vacuum is applied from beneath the pallet. In some aspects, an amount of catalyst coating on surfaces of passageways located on an outermost edge of the catalyst monolith is substantially similar to an amount of catalyst coating on surfaces of passageways located in a center of the catalyst monolith.

### BRIEF DESCRIPTION OF THE DRAWINGS

Figures 1a and 1b show a pallet of aspects of the present invention.
Figure 2 shows a pallet of aspects of the present invention.
Figure 3 shows a dosing line configuration with a pallet and substrate.

### DETAILED DESCRIPTION

Articles, methods, and systems of the present invention relate to improvements for effectively coating a catalyst monolith with a catalyst slurry. The invention is particularly directed to a novel pallet for supporting a catalyst monolith during coating, resulting in improved catalyst coating on the peripheral passageways of the catalyst monolith.

### Pallet

It has been found that a pallet configured according to the present invention may result in improved catalyst coating coverage, particularly on the peripheral passageways of the catalyst monolith, due to the absence of a lip projecting radially inward from the inside edge of the pallet.

Generally, a pallet may have an outer ring and two or more support bars which extend across the inside of the ring. The outer ring may have any suitable size and shape to be structurally sound and to support the desired catalyst monolith to be coated. Suitable ring shapes may include but are not limited to a circle, oval, ellipse, square, rectangle, etc. For example, a pallet may have an inner diameter of about 150 mm to about 300 mm; about 150 mm to about 290 mm; about 160 mm to about 280 mm; about 170 mm to about 270 mm; about 180 mm to about 260 mm; about 190 mm to about 250 mm; about 180 mm; or about 250 mm.

### Support Bars

A pallet may include two or more support bars which extend across the inside of the ring, reaching from one side of the ring to the other, which may support a catalyst monolith during a coating process. It was found that including support bars which extend across the inside of the ring may provide improved support and less damage to a catalyst monolith as compared to using support bars which project inward but do not extend all the way across the inside of the ring. In some aspects, a pallet includes two support bars, two or more support bars, three support bars, four support bars, five support bars, six support bars, seven support bars, eight support bars, etc., as necessary to effectively support and balance the catalyst monolith during coating. In some aspects, the number of support bars is limited by the requirement to leave room for a lift platform.

In some aspects, the ring and the support bars are formed as independent pieces, and the support bars are then secured to the ring. For example, the support bars may be secured to the ring by inserting the support bars into receiving slots formed in the ring. The support bars may then be secured into place by any suitable means, including but not limited to bolts. In some aspects, the support bars are removable and are able to be replaced in the ring.

In certain aspects, a damping system may be included with the support bars in order to reduce shock to the surface of the catalyst monolith when being placed onto the pallet and/or during coating. A damping system may include springs within the receiving slot upon which the support bars will rest. Such springs may provide a damping effect if excessive load is applied, thereby protecting the surface of the catalyst monolith from damage.

In some aspects, the support bars are specifically shaped and/or positioned to minimize obstruction of passageways from the pull of the vacuum. For example, the support bars may have a narrow width and/or be positioned to align with passageway walls rather than openings where possible. In some aspects, the support bars have a width of less than 1.5 mm; less than 1.25 mm; less than 1 mm; less than 0.75 mm; about 1.5 mm; about 1.25 mm; about 1 mm; about 0.75 mm; or about 0.5 mm. In some aspects, the support bars are positioned parallel to each other.

A pallet may be manufactured by any suitable means. In some aspects, the ring is formed as separate piece from the support bars, i.e., the support bars are formed as independent pieces and are then secured to the ring. The support bars may be secured to the ring by inserting the support bars into receiving slots formed in the ring. The support bars may then be secured into place by any suitable means, including but not limited to bolts. In some aspects, the support bars are removable and are able to be replaced in the ring.

### Substrate Location Plate

In some aspects, that pallet may include a substrate location plate. A substrate location plate may comprise a plate having an outer perimeter corresponding to the outer perimeter of the ring, and an opening in the center of the plate having a shape and size to fit the desired catalyst monolith to be coated. The substrate location plate may be a removable piece that is secured to the top of the ring and may be specific to the size and shape of the desired catalyst monolith to be coated. The substrate location plate may be secured to the ring, for example, by bolts. The desired catalyst monolith may be placed in the opening in the center of the substrate location plate for coating. An advantage of having a substrate location plate is that different sized catalyst monoliths may be accommodated by changing the substrate location plate, while only requiring the use of a single ring. Such a set-up is efficient from both a time and cost perspective.

### Materials

The ring, support bars, and substrate location plate may independently be made of any suitable material. Preferably, the ring and/or support bars are made of material that has a hardness that is equal to or close to the hardness of the material of the catalyst monolith. In some aspects, the ring and support bars are made of the same material. In some aspects, the ring and support bars are made of different materials. In some aspects, the ring may be made of stainless steel. In some aspects, the support bars may be made of stainless steel. In some aspects, the ring may be made of ceramic. In some aspects, the support bars may be made of ceramic. In some aspects, the substrate location plate may be made of stainless steel. In some aspects, the substrate location plate may be made of ceramic.

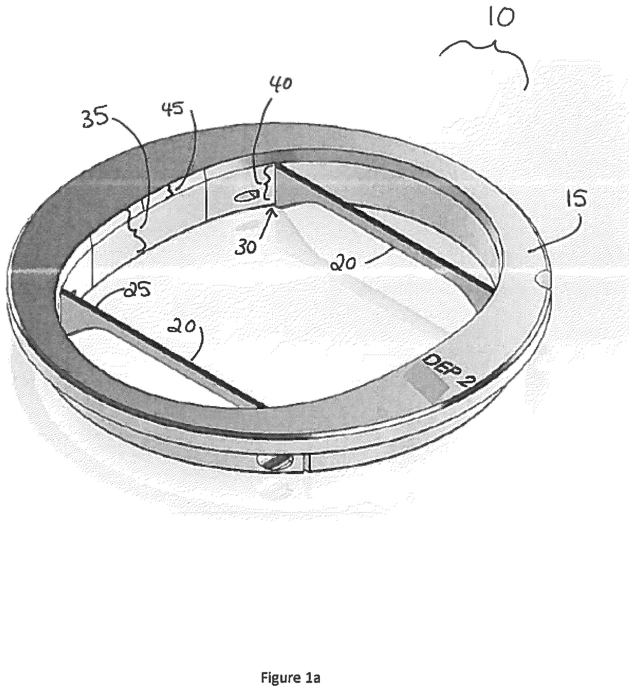

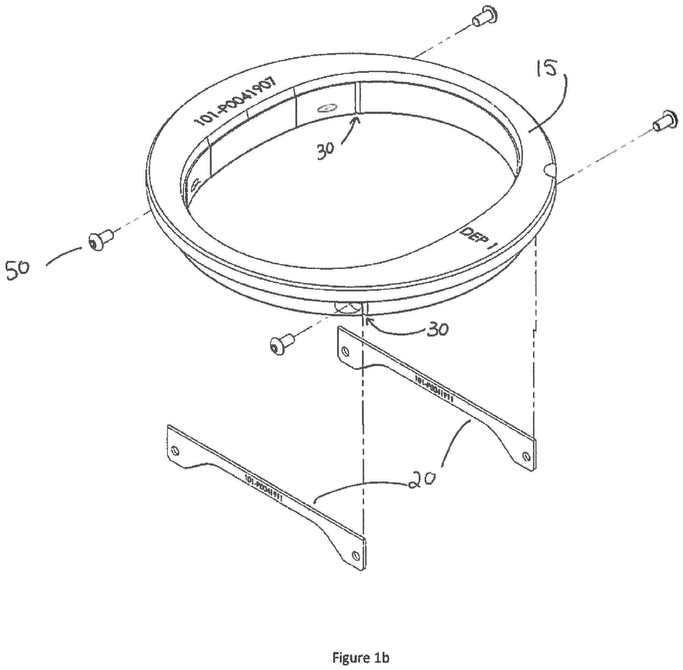

Certain aspects of the invention may be described in reference to the figures. Referring to **Figure 1****,** pallet **10** includes outer ring **15** which may have any suitable size and shape to support the desired catalyst monolith to be coated. Pallet **10** also includes support bars **20** which extend across the inside of ring **15,** reaching from one side of ring **15** to the other. In some aspects, pallet **10** includes two support bars **20,** two or more support bars **20,** three support bars **20,** four support bars **20,** five support bars **20,** etc., as necessary to effectively support and balance the catalyst monolith during coating. Support bars **20** may have width **25** which is sufficient to support a catalyst monolith but narrow enough to minimize obstruction of the vacuum pull.

Referring to **Figure 1b****,** support bars **20** may be secured to ring **15** by inserting support bars **20** into receiving slots **30** formed in ring **15.** In some aspects, receiving slots **30** may be configured to have an opening on the lower side of ring **15.** Support bars **20** may then be secured into place by any suitable means, including but not limited to bolts **50.**

Ring **15** may have a depth **35.** Support bars **20** may have a depth **40.** In some aspects, the depth **40** of support bars **20** is less than the depth **35** of ring **15.** In such aspects, support bars **20** may be secured to ring **15** such that the bottom of support bars **20** is level with the bottom of ring **15,** thereby leaving rise **45** between the top of ring **15** and the top of support bars **20.** In this way, a catalyst monolith supported by the pallet would sit down into the pallet, with part of the ring rising above the lower edge of the catalyst monolith. In some aspects, the pallet is designed such that there will be minimal space between the ring and the catalyst monolith.

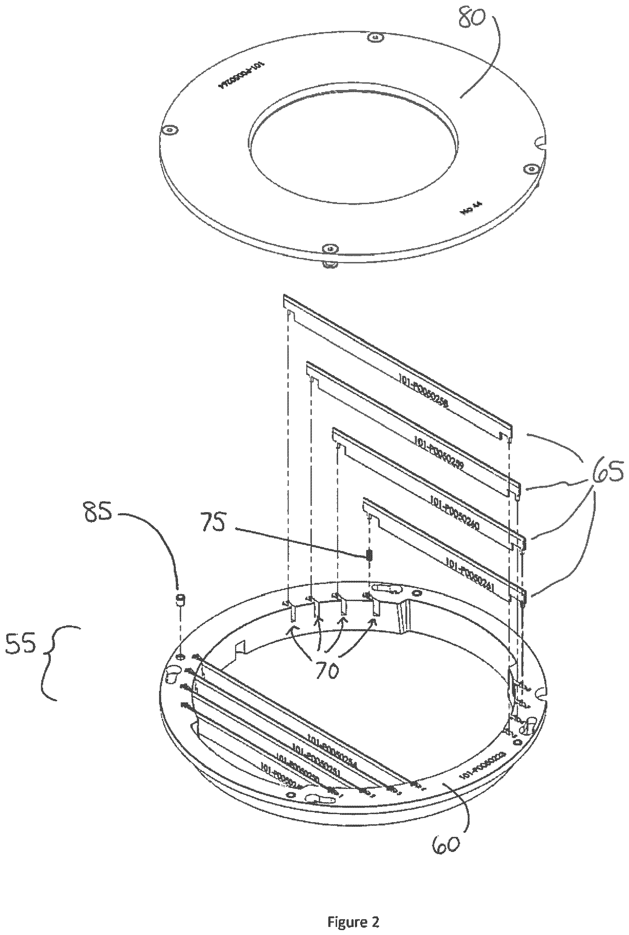

Referring to **Figure 2****,** pallet **55** may include outer ring **60** which may have any suitable size and shape which is at least large enough to support the desired catalyst monolith to be coated. Pallet **55** also includes support bars **65** which extend across the inside of ring **60,** reaching from one side of ring **60** to the other. In some aspects, pallet **55** includes two support bars **65,** two or more support bars **65,** three support bars **65,** four support bars **65,** five support bars **65,** six support bars **65,** seven support bars **65,** eight support bars **65,** etc., as necessary to effectively support and balance the catalyst monolith during coating. Support bars **65** may be secured to ring **60** by inserting support bars **65** into receiving slots **70** formed in ring **60.** In some aspects, receiving slots **70** may be configured to have an opening on the upper side of ring **60.** Support bars **65** may then be secured into place by any suitable means, including but not limited to bolts. Pallet **55** may also include springs **75** within receiving slots **70** upon which support bars **65** rest, which may act as a damping system.

Pallet **55** may include substrate location plate **80.** Substrate location plate **80** may have an outer perimeter corresponding to the outer perimeter of ring **60,** and an opening in the center of the plate having a shape and size to fit the desired catalyst monolith to be coated. Substrate location plate **80** may be secured to the top of ring **60,** for example, by bolts **85.** Substrate location plate **80** may be a removable and interchangeable piece that is specific to the size and shape of the desired catalyst monolith to be coated.

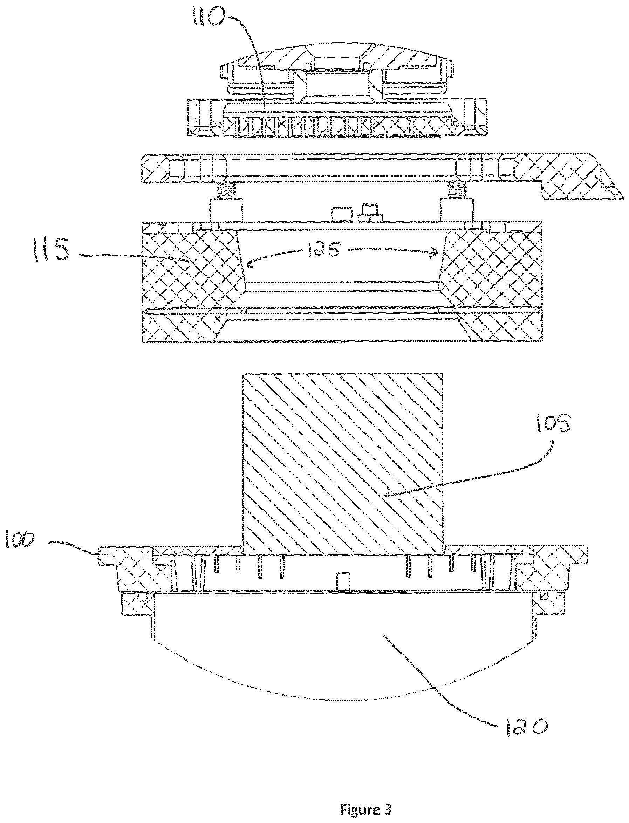

Referring to **Figure 3****,** pallet **100** may be used within any suitable coating line. As part of a coating process, catalyst monolith **105** may be placed on top of pallet **100.** In some aspects, a catalyst slurry is passed through shower head **110** into reservoir **115.** The catalyst slurry is then dosed from reservoir **115** onto monolith substrate **105,** and pulled through monolith substrate **105** by vacuum **120.** In some aspects, upper walls **125** of reservoir **115** may be angled outward, rather than parallel. In some aspects, having angled reservoir walls **125** improves coating performance and provides a more even coating of substrate monolith **105.**

### Catalyst Slurry

A catalyst monolith is prepared by applying a catalyst slurry to a monolith. It is known in the art to coat a substrate with a washcoat comprising a slurry of catalytic components and/or high surface area particles, including alumina, soluble and/or supported catalytically active platinum group metals, promoters such as ceria, zirconia, barium, etc., and other components or absorptive materials such as silica, zeolite, etc. The actual composition of the catalyst slurry is not important for the present invention. In some cases, after the washcoat is applied and dried and/or calcined to give an adherent coating, one or more additional layers is applied. This may be by impregnation of solutions of one or more PGMs, generally selected from one or more of platinum, palladium and rhodium, and/or soluble promoters and/or by applying more layers of the same or different types of catalytically active or absorptive washcoats.

### Catalyst Monoliths

The catalyst monolith support generally comprises an extruded ceramic, e.g. cordierite, or manufactured metal through-flow honeycomb substrate. The monoliths may have a multitude of axially aligned passageways. The monoliths are generally cylindrical, but may be oval or "racetrack" or a skewed oval, and have an effective continuous outer skin. Such substrates are very well known and are commercially available, and may have from 50 to 1200 cells/sq in.

### Method/System

According to aspects of the present invention, a method of coating a catalyst monolith having a multitude of axially aligned passageways may include: (1) applying a catalyst slurry to the monolith; and (2) applying a vacuum to the monolith to draw the catalyst slurry through and form a catalyst coating on surfaces of the passageways. In some aspects, the catalyst slurry may be applied to a top end of the monolith. In some aspects, the vacuum is applied from beneath the pallet. In some aspects, the monolith may be dried and/or calcined after the catalyst slurry is drawn through the monolith.

During the coating process, the catalyst monolith may be positioned on a pallet as described above, which has a ring with two or more support bars extending across the inside of the ring, such that the catalyst monolith is balanced and supported on the support bars. In some aspects, the pallet includes a substrate location plate that is sized to accommodate the catalyst monolith to be coated. In some aspects, the coating method provides a coated catalyst monolith with an amount of catalyst coating on surfaces of passageways located on an outermost edge of the catalyst monolith that is substantially similar to an amount of catalyst coating on surfaces of passageways located in a center of the catalyst monolith.

### Benefits

Articles, methods, and systems of the present invention have been found to provide improvements for effectively coating a catalyst monolith with a catalyst slurry. It has been found that a pallet configured according to the present invention may result in improved catalyst coating coverage, particularly on the peripheral passageways of the catalyst monolith, due to the absence of a lip projecting radially inward from the inside edge of the pallet. Such benefit may be realized because the support bars are specifically sized, shaped, and/or positioned to minimize obstruction of passageways from the pull of the vacuum.

In some aspects, the use of the pallet of aspects of the present invention provides a coated catalyst monolith with an amount of catalyst coating on surfaces of passageways located on an outermost edge of the catalyst monolith that is substantially similar to an amount of catalyst coating on surfaces of passageways located in a center of the catalyst monolith.

### Examples

Four batches were run - Batch 1, Batch 2, Batch 3, and Batch 4 - to coat catalyst monoliths using the same process. Each batch was run with the same catalyst slurry and the same type/size of catalyst monoliths. Batch 1 included 430 catalyst monoliths; Batch 2 included 640 catalyst monoliths; Batch 3 included 3300 catalyst monoliths; and Batch 4 included 1700 catalyst monoliths. For each coating, the catalyst slurry was dosed from above and pulled through the catalyst monolith with a vacuum. The catalyst monolith was then flipped 180 degrees and the catalyst slurry was dosed again from above and pulled through the catalyst monolith with a vacuum. These two catalyst slurry doses together comprise a first pass. The steps were repeated to comprise a second pass. For Batches 1-3, the catalyst monoliths were supported on a typical stepped pallet, where the pallet had a lip projecting radially inward from the ring, which lip supported the catalyst monolith. For Batch 4, the catalyst monoliths were supported on a pallet having two support bars and no lip projecting radially inward from the ring, meaning air could flow between edge of the substrate monolith and the edge of the ring when vacuum was applied.

The coated catalyst monoliths were then analyzed to determine the existence and extent of uncoated regions. For Batch 1, 50% of the analyzed coated catalyst monoliths were found to have uncoated or partially coated outer channels. For Batch 2, 17% of the analyzed coated catalyst monoliths were found to have uncoated or partially coated outer channels. For Batch 3, 5.7% of the analyzed coated catalyst monoliths were found to have uncoated or partially coated outer channels. For Batch 4, the analyzed coated catalyst monoliths were found to have no uncoated or partially coated outer channels. These results clearly demonstrate the advantages provided by the pallet of the present invention, as the catalyst monolith had significantly improved coating coverage on the outer channels.

### Terms

In the present disclosure, the singular forms "a," "an," and "the" include the plural reference, and reference to a particular numerical value includes at least that particular value, unless the context clearly indicates otherwise. Thus, for example, a reference to "a material" is a reference to at least one of such materials and equivalents thereof known to those skilled in the art, and so forth.

When a value is expressed as an approximation by use of the descriptor "about," it will be understood that the particular value forms another embodiment. In general, use of the term "about" indicates approximations that can vary depending on the desired properties sought to be obtained by the disclosed subject matter and is to be interpreted in the specific context in which it is used, based on its function. The person skilled in the art will be able to interpret this as a matter of routine. In some cases, the number of significant figures used for a particular value may be one non-limiting method of determining the extent of the word "about." In other cases, the gradations used in a series of values may be used to determine the intended range available to the term "about" for each value. Where present, all ranges are inclusive and combinable. That is, references to values stated in ranges include every value within that range.

It is to be appreciated that certain features of the invention which are, for clarity, described herein in the context of separate embodiments, may also be provided in combination in a single embodiment. That is, unless obviously incompatible or specifically excluded, each individual embodiment is deemed to be combinable with any other embodiment(s) and such a combination is considered to be another embodiment. Conversely, various features of the invention that are, for brevity, described in the context of a single embodiment, may also be provided separately or in any sub-combination. Finally, while an embodiment may be described as part of a series of steps or part of a more general structure, each said step may also be considered an independent embodiment in itself, combinable with others.

The transitional terms "comprising," "consisting essentially of," and "consisting" are intended to connote their generally accepted meanings in the patent vernacular; that is, (i) "comprising," which is synonymous with "including," "containing," or "characterized by," is inclusive or open-ended and does not exclude additional, unrecited elements or method steps; (ii) "consisting of" excludes any element, step, or ingredient not specified in the claim; and (iii) "consisting essentially of" limits the scope of a claim to the specified materials or steps "and those that do not materially affect the basic and novel characteristic(s)" of the claimed invention. Embodiments described in terms of the phrase "comprising" (or its equivalents), also provide, as embodiments, those which are independently described in terms of "consisting of" and "consisting essentially" of. For those embodiments provided in terms of "consisting essentially of," the basic and novel characteristic(s) is the ability of the systems to combust fuels efficiently, without the need for separate igniters or heating the fuel mixtures above ignition temperatures prior to introducing them to the catalysts. Materials or steps which do not detract from such operability would be considered within the scope of such embodiments.

When a list is presented, unless stated otherwise, it is to be understood that each individual element of that list, and every combination of that list, is a separate embodiment. For example, a list of embodiments presented as "A, B, or C" is to be interpreted as including the embodiments, "A," "B," "C," "A or B," "A or C," "B or C," or "A, B, or C."

Throughout this specification, words are to be afforded their normal meaning, as would be understood by those skilled in the relevant art. However, so as to avoid misunderstanding, the meanings of certain terms will be specifically defined or clarified.

"Optional" or "optionally" means that the subsequently described circumstance may or may not occur, so that the description includes instances where the circumstance occurs and instances where it does not. Similarly, embodiments which refer to a component or step as being "optionally present," those embodiments include separate independent embodiments in which the step or component is present or absent. The description "optional" allows for, but does not require, the optional condition to occur.

## Claims

1. A pallet for supporting a catalyst monolith during coating, comprising a ring with two or more support bars extending across the inside of the ring.

2. The pallet of claim 1, wherein the two or more support bars are positioned parallel to each other.

3. The pallet of claim 1, wherein the ring is circular or oval-shaped.

4. The pallet of claim 1, wherein the ring does not include a lip which projects radially inward from the ring.

5. The pallet of claim 1, wherein the ring is made of stainless steel.

6. The pallet of claim 1, wherein the ring is made of ceramic.

7. The pallet of claim 1, wherein the support bars are made of stainless steel.

8. The pallet of claim 1, wherein the support bars are made of ceramic.

9. The pallet of claim 1, wherein the support bars are independent pieces and are each secured to the ring.

10. The pallet of claim 9, wherein the support bars are inserted into receiving slots formed in the ring.

11. The pallet of claim 10, wherein the receiving slots further comprise springs upon which the supports bars rest.

12. The pallet of claim 1, further comprising a substrate location plate.

13. A method of coating a catalyst monolith having a multitude of axially aligned passageways, the method comprising:
a. applying a catalyst slurry to the monolith;
b. applying a vacuum to the monolith to draw the catalyst slurry through and form a catalyst coating on surfaces of the passageways;
wherein the catalyst monolith is positioned on the pallet of claim 1, such that the catalyst monolith is balanced and supported on the support bars.

14. The method of claim 13, further comprising drying and calcining the monolith.

15. The method of claim 13, comprising applying the catalyst slurry to a top end of the monolith.
